# EUROPÄISCHE PATENTSCHRIFT

(11) **EP 4 346 037 B1**
(45) Veröffentlichungstag und Bekanntmachung des Hinweises auf die Patenterteilung: **08.07.2026**
(21) Anmeldenummer: 23201046.2
(22) Anmeldetag: 29.09.2023
(51) Int. Cl.: H02B 1/56, H02B 1/28, H05K 7/20

(54) **SCHALTSCHRANK**
ELECTRICAL CABINET
ARMOIRE ÉLECTRIQUE

(30) Priorität: 30.09.2022 DE 102022125275; 30.09.2022 DE 202022105541 U
(43) Veröffentlichungstag der Anmeldung: 03.04.2024
(73) Patentinhaber: Rapp, Thorsten, 75236 Kämpfelbach (DE)
(72) Erfinder: Rapp, Thorsten, 75236 Kämpfelbach (DE)
(74) Vertreter: Patentanwälte und Rechtsanwalt Weiß, Arat & Partner mbB

(56) Entgegenhaltungen:
- EP-B1- 0 810 704
- EP-B1- 0 944 297
- EP-B1- 2 276 128
- DE-A1- 10 119 095
- DE-B4- 10 321 022
- DE-B4- 102008 053 958
- US-A- 6 082 441
- - INTERPLAST KUNSTSTOFFE GMBH: "Triplex - structured core panels", 27 September 2022 (2022-09-27), XP093354747, Retrieved from the Internet <URL:https://web.archive.org/web/20220927121003/https://triplex.de/images/downloads/strukturkammerplatten-e.pdf> [retrieved on 20260116]

## Beschreibung

### Technisches Gebiet

Die Erfindung betrifft einen Schaltschrank nach dem Oberbegriff des Anspruchs 1.

### Stand der Technik

Derartige Schaltschränke sind bereits in vielfältiger Form und Ausgestaltung bekannt und gebräuchlich. So ist wird beispielsweise in der WO 2008/014627 eine Vorrichtung mit Luft-Luft-Wärmetauscher zur Bereitstellung von Kühlluft für einen Elektroschrank offenbart, wobei mehrere in Reihe geschaltete Wärmetauscherkassetten sowie mehrere in Reihe angeordnete elektrisch betriebene Lüfter vorgesehen sind.

Unter dem Begriff "Schaltschrank" sollen hier ganz allgemein alle Arten von Schränken, Gehäusen, Kabinen oder Kästen verstanden werden, die zur Aufnahme von elektrischen oder elektronischen Geräten und/oder Installationen verwendet, bestimmt oder wenigstens geeignet sind.

In diesem Zusammenhang wird auf die EP 0 944 297 B1 verwiesen, die einen mehrschaligen Geräteschrank für elektrische und elektronische Bauteile offenbart, wobei eine Funktionsraumwand mit einer Berippung für eine Verwirbelung einer Fluidströmung ausgestattet ist, wobei für die Berippung der Funktionsraumwand Rippenschienen vorgesehen sind, wobei die Rippenschienen eine Vielzahl von Rippen aufweisen, zwischen welchen Durchgangsöffnungen für den Fluidstrom gebildet sind.

Weiter wird auf die DE 10 2008 053 958 B4 hingewiesen, die eine Kühlanordnung für einen Schaltschrank offenbart, wobei die Wände als doppelwandige Luft-Luft-Wärmetauscher ausgebildet sind, wobei Lüfter im Zusammenhang mit den Wänden zu einem Luftaustausch und damit zur Abkühlung des Schaltschranks führen. Eine ähnliche Konstruktion zeigt die US 6,082, 441 A.

Auch wird auf die DE 101 19 095 A1 verwiesen, die einen Schaltschrank für elektrische und elektronische Geräte offenbart, der staub- und wasserdicht abgeschlossen ist und zumindest teilweise eine mehrschalige Wand besitzt, und die im inneren entstehende Wärme durch die Gehäusewand nach außen abgibt und der den Einbauten auch dann genügend Schutz bietet, wenn er im Freien aufgestellt wird, wobei zur Vergrößerung der zur Wärmeübertragung verfügbaren Fläche mindestens eine Gehäusewand auf mindestens einer Seite mit einem durchgehendem Wärmeleitkörper besteht, der aus einem Teil gefertigt wird, wärmeleitend mit der Gehäusewand verbunden wird, wobei der Wärmeleitkörper eine Fluidströmung entlang seiner Längsachse erlaubt.

Zusätzlich wird auf die DE 103 21 022 B4 verwiesen, die einen Schaltschrank für eine Tablettenpresse offenbart. Der Schaltschrank offenbart an einer Außenseite des geschlossenen Schaltschrankgehäuses einen Belüftungskanal, dessen Innenwand von einem Wandabschnitt des Gehäuses gebildet ist. Dem Belüftungskanal ist ein Lüfter zugeordnet, der Außenluft über mindestens eine Eintrittsöffnung in den Belüftungskanal fördert, wobei die Luft über mindestens eine Austrittsöffnung entweicht. Im Inneren des Schaltschrankgehäuses ist ein zweiter Lüfter angeordnet, der die Luft im Gehäuseinneren umwälzt, sodaß sie zumindest teilweise an der Innenseite der Gehäusewand entlang streicht, die den Belüftungskanal begrenzt.

Darüber hinaus offenbart EP 0 810 704 B1 ein weiteres Beispiel für einen Schaltschrank mit doppelwandigen Paneelwänden, die zu einer verbesserten Kühlung beitragen.

Schließlich werden in EP 2 276 128 B1 und XP093354747 bekannte Beispiele dreischichtiger Strukturkammerplatten offenbart.

### Aufgabe der Erfindung

Die Aufgabe der vorliegenden Erfindung ist es, die Nachteile aus dem Stand der Technik zu überwinden. Insbesondere soll ein belüftungsfähiger Schaltschrank bereitgestellt werden, welcher sehr energiesparend ist und dabei für unterschiedliche klimatische Bedingungen geeignet ist. Zudem soll das Belüftungssystem möglichst wenig Raum im Inneren des Schaltschranks einnehmen. Zudem soll eine Einsetzbarkeit sowohl innerhalb als auch ausserhalb von Gebäuden möglich sein.

### Lösung der Aufgabe

Zur Lösung der Aufgabe führen die Merkmale nach dem Anspruch 1. Vorteilhafte Ausgestaltungen sind in den Unteransprüchen beschrieben.

In typischen Ausführungsbeispielen weist ein erfindungsgemäßer Schaltschrank eine quaderförmige und allseitig geschlossene Grundform mit einer doppelwandigen Bauweise auf. Die doppelwandige Bauweise ergibt sich aus einem Außengehäuse und einem Innengehäuse. Das Außengehäuse und das Innengehäuse bestehen aus Metall, vorzugsweise aus einer Aluminium-Magnesium-Silicium-Legierung.

Das Außengehäuse und das Innengehäuse weisen eine gemeinsame Tür auf, die gegenüber einer Rückwand angeordnet ist. Die Tür sowie die Rückwand sind bei Bedarf von dem Schaltkasten demontierbar. Dies bringt insbesondre beim Einbau des Schaltschranks Vorteile mit sich. Je nach Größe des Schaltkastens kann auch eine Doppeltür nach dem Vorbild einer Flügeltür vorgesehen sein. Sowohl die Doppeltür als auch die einfache Tür weisen einen jeweiligen Öffnungswinkel von 180° auf. Im Weiteren ist der Begriff der Tür auch als Doppeltür zu lesen.

Die Tür sowie die demontierbare Rückwand weisen an ihren jeweiligen Kanten Dichtungen auf, die geeignet sind den Schaltschrank Staub- und Strahlwasserdicht zu halten. Mit jeweiligen Kanten sind die Kanten der Tür sowie der Rückwand gemeint, die mit angrenzenden Bereichen des Schaltkastens in Verbindung kommen. Vorausgesetzt die Tür sowie die Rückwand werden in vorgesehener Weise an dem Schaltkasten angeordnet. Diese Dichtungen sind vorzugsweise Gummilippen.

Der Schaltkasten weist einen Boden und ein gegenüberliegendes Dach auf. Der Boden und das Dach sind über zwei gegenüberliegende Seitenwände miteinander verbunden. An der Rückseite ist die Rückwand angeordnet, welcher der Tür gegenüberliegt. Der Boden, das Dach die beiden Seitenwände, die Rückwand und die Tür sind Bestandteile des Außengehäuses und des Innengehäuses.

Zwischen dem Außengehäuse und dem Innengehäuse ist eine Isolationsschicht in Form einer Strukturkammerplatte angeordnet. Dabei ist die Strukturkammerplatte in ihrem Inneren luftdurchlässig steht mit dem Lüfter in Verbindung. Luftdurchlässig bedeutet hierbei, dass die im Inneren befindlichen Wandungen der Strukturkammerplatte derart angeordnet sind, dass sie einen gemeinsamen Luftraum bilden. Dass die Strukturkammerplatte mit dem Lüfter in Verbindung steht bedeutet, dass der gemeinsame Luftraum von dem Lüfter beeinflusst wird. Dabei kann der Lüfter entweder Luft aus dem Inneren der Strukturkammerplatte heraus pumpen oder Luft in das Innere der Strukturkammerplatte hinein pumpen.

Auch bei der Tür und der Rückwand ist zwischen dem Außengehäuse und dem Innengehäuse eine Isolationsschicht in Form der Strukturkammerplatte angeordnet.

Bei der Strukturkammerplatte sind unterschiedliche Ausführen denkbar. Bevorzugt wird eine Triplex 10 Strukturkammerplatte. Erfindungsgemäß ist die Strukturkammerplatte dreischichtig aufgebaut, wobei zwischen zwei Kunststoffplatten zahlreiche kleinstrukturierte Strukturkammern angeordnet sind. Die dort angeordneten Strukturkammern stehen jeweils mit den benachbarten Strukturkammern in Verbindung, so dass die Strukturkammerplatte im Bereich der Strukturkammern luftdurchlässig ist. Luftdurchlässig bedeutet also, dass die Strukturkammern einen gemeinsamen Luftraum bilden. Als Strukturkammerplatte kommen auch Wabenplatten in Betracht, solange sie die gleichen Eigenschaften, wie beispielsweise Triplex-10-Platten aufweisen.

Die Kunststoffplatten sind nicht luftdurchlässig. Luft kann daher nur im Bereich der Strukturkammern zwischen den beiden Kunststoffplatten in der Strukturkammerplatte zirkulieren bzw. verteilt werden.

Bei der Strukturkammerplatte ist für vorliegende Erfindung von zentraler Bedeutung, dass Luft im Bereich der Strukturkammern frei von Strukturkammer zu Strukturkammer zirkulieren kann.

Ist der Schaltkasten rundum geschlossen, kann Luft in allen Bereichen der Strukturkammerplatten zirkulieren. Dabei kann Luft beispielsweise auch von den Strukturkammern in der Tür, in die Strukturkammern des Daches, des Bodens oder der angrenzenden Seitenwände strömen. Die Strukturkammerplatten der einzelnen Elemente des Außengehäuses und des Innengehäuses stehen miteinander in Kontakt. Sie sind nicht voneinander getrennt. Folglich weist bei geschlossener Tür das Gehäuse, bestehend aus Innengehäuse und Außengehäuse, zwischen dem Innengehäuse und dem Außengehäuse einen gemeinsamen Luftraum auf.

Erfindungsgemäß ist vorgesehen, dass die Strukturkammerplatte mit ihren jeweiligen Kunststoffplatten mit dem Außengehäuse und dem Innengehäuse verklebt ist. Dadurch ergibt sich eine Sandwich-Bauweise aus dem Außengehäuse der Strukturkammerplatte und dem Innengehäuse. Die Strukturkammerplatten weist eine Dicke von 0,5 cm bis 2,5 cm auf. Die Triplex 10 Strukturkammerplatte weist eine Dicke von 9,6 mm bis 11,7 mm auf.

In einer der beiden Seitenwände ist vorzugsweise in einem Bereich der näher zu dem Dach angeordnet ist als zu dem Boden ein Lüfter zwischen dem Außengehäuse und dem Innengehäuse angeordnet. Der Lüfter steht mit den luftdurchlässigen Strukturkammern im Inneren der Strukturkammerplatte einerseits und andererseits mit dem Inneren des Schaltschranks in Verbindung. Dazu weist das Innengehäuse an diesem Bereich entsprechende Lüftungsschlitze auf.

Der Lüfter ist sehr flach ausgebildet, was die Anordnung zwischen dem Außengehäuse und dem Innengehäuse erlaubt. Sehr flach bedeutet, dass der Lüfter die gleiche oder geringere Bauhöhe bzw. Dicke aufweist, als die Bauhöhe bzw. Dicke der Strukturkammerplatte vorgibt. Der Lüfter ist ein Gehäuselüfter, dessen Leistung für das Luftvolumen des Schaltschranks angemessen ist. Der Gehäuselüfter wird elektrisch betrieben.

Weiterhin weist der Schaltschrank an seinem Außengehäuse eine Außenlüftungsöffnung auf. Diese Außenlüftungsöffnung stellt eine offene Verbindung zwischen der äußeren Umgebung des Schaltschranks und den luftdurchlässigen Strukturkammern der Strukturkammerplatte her, wobei die Kunststoffplatte, die an das Außengehäuse angrenzt, in diesem Bereich von der Außenlüftungsöffnung durchgriffen ist.

Das Innengehäuse weist zudem eine Innenlüftungsöffnung auf. Diese Innenlüftungsöffnung ist in einer der beiden Seitenwände, vorzugsweise in einem Bereich der näher zu dem Boden als zu dem Dach liegt, angeordnet. Die Innenlüftungsöffnung ist einerseits eine offene Verbindung zwischen den luftdurchlässigen Strukturkammern im Inneren der Strukturkammerplatten und andererseits dem Inneren des Schaltschranks.

Die Außenlüftungsöffnung und die Innenlüftungsöffnung weisen in einem Ausführungsbeispiel einen Verschluss auf. Diese jeweiligen Verschlüsse erlauben es, die Außenlüftungsöffnung bzw. die Innenlüftungsöffnung bei Bedarf luftdicht zu verschließen und auch wieder zu öffnen. Diese Verschlüsse sind manuell über einen Schieber oder dergleichen zu bedienen. Es kann aber auch vorgesehen sein, dass die Verschlüsse automatisch verschlossen bzw. geöffnet werden können.

In einem Ausführungsbeispiel weist der Schaltschrank einen Temperatursensor auf. Dieser Temperatursensor ist geeignet die Lufttemperatur innerhalb und ausserhalb des Schaltschranks zu erfassen und anzuzeigen. Dabei kann vorgesehen sein, dass bei einer zuvor festgelegten Lufttemperatur innerhalb und/oder außerhalb des Schaltschranks, die Außenlüftungsöffnung bzw. die Innenlüftungsöffnung über den automatisch geregelten Verschluss geöffnet oder geschlossen werden. Weiterhin kann vorgesehen sein, dass die Drehzahl des Gehäuselüfters entsprechend der erfassten Lufttemperaturen automatisch geregelt werden kann.

Der vorliegende erfindungsgemäße Schaltschrank bringt aufgrund der beschriebenen Merkmale unterschiedliche Vorteile mit sich.

Herrscht ausserhalb des erfindungsgemäßen Schaltschranks eine Lufttemperatur die niedriger ist als eine Lufttemperatur im Inneren des Schaltkastens, sind die Verschlüsse der Außenlüftungsöffnung, und der Innenlüftungsöffnung, falls diese Verschlüsse vorhanden sind, geöffnet. Zudem ist der Gehäuselüfter eingeschaltet. Der Gehäuselüfter saugt warme Luft aus dem Inneren des Schaltschranks an und leitet diese in die luftdurchlässigen Strukturkammern der Strukturkammerplatte. Weiterhin wird kühlere Luft von außen durch die Außenlüftungsöffnung in die luftdurchlässigen Strukturkammern der Strukturkammerplatte gesogen. Innerhalb der Strukturkammern erfolgt ein Wärmetausch. Dabei wird Luft über die Innenlüftungsöffnung aus den luftdurchlässigen Strukturkammern der Strukturkammerplatte in das Innere des Schaltkastens abgegeben, die kühler als die Luft ist, die an dem Gehäuselüfter angesogen wurde. Dadurch wird das Innere des Schaltschranks auf effektive Weise gekühlt.

Herrscht ausserhalb des erfindungsgemäßen Schaltschranks eine Lufttemperatur die höher ist als eine Lufttemperatur im Inneren des Schaltschranks, sind die Verschlüsse der Außenlüftungsöffnung und der Innenlüftungsöffnung, falls diese Verschlüsse vorhanden sind, verschlossen. Der Gehäuselüfter ist ausgeschaltet. In diesem Fall wird keine Luft durch die luftdurchlässigen Strukturkammern der Strukturkammerplatte befördert. Die Strukturkammerplatte dient dann als Isolationsschicht und verhindert deutlich ein Aufwärmen des Inneren des erfindungsgemäßen Schaltschranks durch die erhöhten Lufttemperaturen ausserhalb des Schaltschranks. Dies spart Energie und erlaubt den Einsatz des Schaltschranks auch in ungeschützten Außenbereichen.

Die Verschlüsse der Außenlüftungsöffnung und die Innenlüftungsöffnung sind optional und das oben beschriebene Lüftungssystem des erfindungsgemäßen Schaltschranks ist auch ohne die Verschlüsse wie beschrieben funktionsfähig.

Durch die Anschaltung des Gehäuselüfters wird Energie gespart.

Weiterhin wird durch die platzsparende Anordnung des Gehäuselüfters zwischen dem Außengehäuse und dem Innengehäuse erreicht, dass innerhalb des Schaltkastens kein Raum für ein Belüftungssystem eingenommen wird, was dazu führt, dass dort mehr elektrische oder elektronische Geräte und/oder Installationen Platz finden. Dadurch kann der Schaltschrank kleiner als herkömmliche Schaltschränke mit Belüftungssystemen sein, was bei gleicher Aufnahmekapazität, die Anordnung auch in Bereichen erlaubt, an denen wenig Platz vorherrscht.

## Patentansprüche

1. Schaltschrank mit einem Außengehäuse, einem Innengehäuse und einem Lüfter, wobei zwischen dem Außengehäuse und dem Innengehäuse eine Isolationsschicht vorhanden ist, wobei das Außengehäuse Außenlüftungsöffnungen aufweist und das Innengehäuse Innenlüftungsöffnungen aufweist, wobei die Außenlüftungsöffnungen und die Innenlüftungsöffnungen mit dem luftdurchlässigen Inneren der Strukturkammerplatte in Verbindung stehen,
wobei die Isolationsschicht eine Strukturkammerplatte ist, die in ihrem Inneren luftdurchlässig ist und mit dem Lüfter in Verbindung steht, wobei die im Inneren befindlichen Wandungen der Strukturkammerplatte derart angeordnet sind, dass sie einen gemeinsamen Luftraum bilden, der von dem Lüfter beeinflusst wird, wobei die Strukturkammerplatte dreischichtig aufgebaut ist, und Strukturkammern umfasst, wobei die Strukturkammern stehen jeweils mit den benachbarten Strukturkammern in Verbindung, sodass die Strukturkammerplatte im Bereich der Strukturkammern luftdurchlässig ist,
**dadurch gekennzeichnet, dass**:
die Strukturkammern zwischen zwei Kunststoffplatten angeordnet sind, die Strukturkammerplatte mit ihren jeweiligen Kunststoffplatten mit dem Außengehäuse und dem Innengehäuse verklebt ist, und die Strukturkammerplatten eine Dicke von 0,5 cm bis 2,5 cm aufweist.

2. Schaltschrank nach Anspruch 1, **dadurch gekennzeichnet, dass** der Lüfter ein Gehäuselüfter ist, welcher zwischen dem Außengehäuse und dem Innengehäuse angeordnet ist und einerseits mit dem luftdurchlässigen Inneren der Strukturkammerplatte und andererseits mit einer Innenseite des Schaltschranks in Verbindung steht.

3. Schaltschrank nach mindestens einem der vorherigen Ansprüche, **dadurch gekennzeichnet, dass** die Außenlüftungsöffnungen und/oder die Innenlüftungsöffnungen einen Verschluss aufweisen, geeignet die Außenlüftungsöffnungen und/oder die Innenlüftungsöffnungen luftdicht zu verschließen.

4. Schaltschrank nach mindestens einem der vorherigen Ansprüche, **dadurch gekennzeichnet, dass** das Außengehäuse und das Innengehäuse eine gemeinsame Tür aufweisen, die gegenüber einer Rückwand angeordnet ist.

5. Schaltschrank nach Anspruch 4, **dadurch gekennzeichnet, dass** die Tür und die Rückwand von dem Schaltkasten demontierbar sind.

6. Schaltschrank nach mindestens einem der vorherigen Ansprüche, **dadurch gekennzeichnet, dass** das Außengehäuse und das Innengehäuse aus einer Aluminium-Magnesium-Silicium-Legierung bestehen.

7. Schaltschrank nach mindestens einem der vorherigen Ansprüche, **dadurch gekennzeichnet, dass** ein Temperatursensor vorhanden ist, geeignet die Lufttemperatur innerhalb und ausserhalb des Schaltschranks zu erfassen.

8. Schaltschrank nach mindestens einem der vorherigen Ansprüche, **dadurch gekennzeichnet**, der Schaltschrank an der Tür und der Rückwand Dichtungen aufweist, geeignet den Schaltschrank Staub- und Strahlwasserdicht ist zu halten.

## Claims

1. Control cabinet with an outer housing, an inner housing and a fan, wherein an insulating layer is provided between the outer housing and the inner housing, wherein the outer housing has external ventilation openings and the inner housing has internal ventilation openings, wherein the external ventilation openings and the internal ventilation openings communicate with the air-permeable interior of the structural chamber plate, wherein the insulating layer is a structural chamber plate which is air-permeable in its interior and communicates with the fan, wherein the internally located walls of the structural chamber plate are arranged such that they form a common air space which is influenced by the fan, wherein the structural chamber plate has a three-layer structure and comprises structural chambers, wherein the structural chambers are each in communication with the adjacent structural chambers, so that the structural chamber plate is air-permeable in the region of the structural chambers,
**characterised in**
**that** the structural chambers are arranged between two plastic plates,
the structural chamber plate is bonded with its respective plastic plates to the outer housing and the inner housing, and
the structural chamber plates have a thickness of 0.5 cm to 2.5 cm.

2. Control cabinet as per claim 1, **characterised in that** the fan is a housing fan which is arranged between the outer housing and the inner housing and communicates, on the one hand, with the air-permeable interior of the structural chamber plate and, on the other hand, with an inner side of the control cabinet.

3. Control cabinet according to at least one of the preceding claims, **characterised in that** the external ventilation openings and/or the internal ventilation openings comprise a closure suitable for sealing the external ventilation openings and/or the internal ventilation openings in an airtight manner.

4. Control cabinet according to at least one of the preceding claims, **characterised in that** the outer housing and the inner housing have a common door arranged opposite a rear wall.

5. Control cabinet according to claim 4, **characterised in that** the door and the rear wall are removable from the control cabinet.

6. Control cabinet according to at least one of the preceding claims, **characterised in that** the outer housing and the inner housing are made of an aluminium-magnesium-silicon alloy.

7. Control cabinet according to at least one of the preceding claims, **characterised in that** a temperature sensor is provided, suitable for detecting the air temperature inside and outside the control cabinet.

8. Control cabinet according to at least one of the preceding claims, **characterised in that** the control cabinet has seals on the door and the rear panel, suitable for keeping the control cabinet dust-tight and splash-proof.

## Revendications

1. Armoire électrique comprenant un boîtier extérieur, un boîtier intérieur et un ventilateur, une couche isolante étant prévue entre le boîtier extérieur et le boîtier intérieur, le boîtier extérieur comportant des ouvertures de ventilation extérieures et le boîtier intérieur comportant des ouvertures de ventilation intérieures, les ouvertures de ventilation extérieures et les ouvertures de ventilation intérieures communiquant avec l'intérieur perméable à l'air d'une plaque à chambres structurelles,
dans laquelle
la couche isolante est une plaque à chambres structurelles dont l'intérieur est perméable à l'air et qui communique avec le ventilateur,
les parois, situées à l'intérieur, de la plaque à chambres structurelles sont agencées de manière à former un espace d'air commun qui est influencé par le ventilateur,
la plaque à chambres structurelles est constituée de trois couches et comprend des chambres structurelles,
les chambres structurelles communiquent chacune avec les chambres structurelles voisines de sorte que la plaque à chambres structurelles est perméable à l'air dans la zone des chambres structurelles,
**caractérisée en ce que**
les chambres structurelles sont disposées entre deux plaques en matière plastique,
la plaque à chambres structurelles est collée, par ses plaques en matière plastique respectives, au boîtier extérieur et au boîtier intérieur, et
la plaque à chambres structurelles présente une épaisseur comprise entre 0,5 cm et 2,5 cm.

2. Armoire électrique selon la revendication 1,
**caractérisée en ce que** le ventilateur est un ventilateur de boîtier qui est disposé entre le boîtier extérieur et le boîtier intérieur et qui communique, d'une part, avec l'intérieur perméable à l'air de la plaque à chambres structurelle et, d'autre part, avec une face intérieure de l'armoire électrique.

3. Armoire électrique selon l'une au moins des revendications précédentes,
**caractérisée en ce que** les ouvertures de ventilation extérieures et/ou les ouvertures de ventilation intérieures comportent un obturateur apte à fermer de manière étanche à l'air les ouvertures de ventilation extérieures et/ou les ouvertures de ventilation intérieures.

4. Armoire électrique selon l'une au moins des revendications précédentes,
**caractérisée en ce que** le boîtier extérieur et le boîtier intérieur comportent une porte commune disposée à l'opposé d'une paroi arrière.

5. Armoire électrique selon la revendication 4,
**caractérisée en ce que** la porte et la paroi arrière sont démontables de l'armoire électrique.

6. Armoire électrique selon l'une au moins des revendications précédentes,
**caractérisée en ce que** le boîtier extérieur et le boîtier intérieur sont constitués d'un alliage d'aluminium-magnésium-silicium.

7. Armoire électrique selon l'une au moins des revendications précédentes,
**caractérisée en ce qu'**elle comporte un capteur de température apte à détecter la température de l'air à l'intérieur et à l'extérieur de l'armoire électrique.

8. Armoire électrique selon l'une au moins des revendications précédentes,
**caractérisée en ce que** l'armoire électrique comporte, au niveau de la porte et de la paroi arrière, des joints d'étanchéité permettant à l'armoire électrique d'être étanche à la poussière et aux projections d'eau.
